**Europäisches Patentamt**

**European Patent Office**

**Office européen des brevets**

(19)

(11) Veröffentlichungsnummer: **0 243 660 B1**

## EUROPÄISCHE PATENTSCHRIFT

(12)

(45) Veröffentlichungstag der Patentschrift: **02.01.92**

(51) Int. Cl.5: **C08F 10/02**, C08F 4/22, C08F 4/62

(21) Anmeldenummer: **87104145.5**

(22) Anmeldetag: **20.03.87**

(54) **Verfahren zum Herstellen von Homo- sowie Copolymerisaten des Ethens durch Phillips-Katalyse.**

(30) Priorität: **22.03.86 DE 3609828**

(43) Veröffentlichungstag der Anmeldung:
**04.11.87 Patentblatt 87/45**

(45) Bekanntmachung des Hinweises auf die
Patenterteilung:
**02.01.92 Patentblatt 92/01**

(84) Benannte Vertragsstaaten:
**AT BE DE FR GB IT NL**

(56) Entgegenhaltungen:
**US-A- 2 887 471**
**US-A- 4 041 224**

(73) Patentinhaber: **BASF Aktiengesellschaft**
**Carl-Bosch-Strasse 38**
**W-6700 Ludwigshafen(DE)**

(72) Erfinder: **Konrad, Rainer, Dr.**
**Moltkestrasse 48**
**W-6701 Altrip(DE)**
Erfinder: **Warzelhan, Volker, Dr.**
**Suedtiroler Ring 32**
**W-6719 Weisenheim(DE)**
Erfinder: **Gropper, Hans, Dr.**
**Sternstrasse 155**
**W-6700 Ludwigshafen(DE)**
Erfinder: **Schweier, Guenther, Dr.**
**Friedrich-Pietzsch-Strasse 14**
**W-6701 Friedelsheim(DE)**

EP 0 243 660 B1

**Beschreibung**

Die vorliegende Erfindung liegt im Rahmen eines Verfahrens zum Herstellen von Ethen-Homopolymerisaten sowie Ethen-Copolymerisaten mit untergeordneten Mengen an einpolymerisierten $C_3$- bis $C_{12}$-, insbesondere $C_3$- bis $C_8$-$\alpha$-Monoalkenen durch Polymerisation des bzw. der Monomeren bei Temperaturen von 30 bis 150, insbesondere 60 bis 120°C und Drücken von 2 bis 150, insbesondere von 5 bis 60 bar, durch Phillips-Katalyse mittels

(1) eines Trägerkatalysators aus einem Trägerstoff, der mit oxidisch vorliegendem Chrom sowie oxidisch vorliegendem Titan beladen ist, und

(2) eines Cokatalysators,

wobei der Trägerkatalysator (1) erhalten worden ist, indem man

(1.1) in einer ersten Stufe ein mit den gewünschten Mengen Chrom sowie Titan beladenes Katalysator-Vorprodukt (1.1) herstellt aus

(1.1.a) einem feinteiligen, porösen, silikatischen Trägerstoff,

(1.1.b) einer ausgewählten, spezifischen Chromverbindung, sowie (1.1.c) einer ausgewählten, spezifischen Titanverbindung,

und dann

(1.2) in einer zweiten Stufe das aus der ersten Stufe erhaltene Katalysator-Vorprodukt (1.1) in einem wasserfreien, Sauerstoff in einer Konzentration von über 10 Vol.-% enthaltenden Gasstrom 10 bis 1000, insbesondere 60 bis 300 Minuten auf einer Temperatur von 300 bis 900, insbesondere 400 bis 600°C hält (d.h. "calziniert" bzw. "aktiviert") und so in den eigentlichen Trägerkatalysator (1) überführt.

Polymerisationsverfahren dieser Gattung sind bekannt, wobei im gegebenen Zusammenhang als repräsentativ z.B. die in den JP-OSen 141 893/1979 und 49 605/1982 beschriebenen gelten können.

Ein charakteristisches Merkmal jener Verfahren ist, daß Trägerkatalysatoren eingesetzt werden, bei deren Herstellung man in der ersten Stufe - also zur Gewinnung des Katalysator-Vorprodukts - zunächst eine ausgewählte Organochrom- und eine ausgewählte Organotitan-Verbindung unter chemischer Reaktion in einem Lösungsmittel miteinander umsetzt und dann mit dem dabei erhaltenen Umsetzungsprodukt den Trägerstoff belädt.

Als bemerkenswert im gegebenen Zusammenhang können z.B. auch die Polymerisationsverfahren gelten, die in der GB-PS 1 391 771 sowie der US-PS 4 368 302 beschrieben sind.

Das wesentliche Merkmal dieser Verfahren ist, daß Trägerkatalysatoren eingesetzt werden, bei denen die Einbringung der Titan-Komponente dadurch bewirkt wird, daß zum Herstellen des Katalysator-Vorprodukts ein mit der Chromkomponente bereits beladener Trägerstoff mit der Titan-Komponente vereinigt wird.

Im gegebenen Zusammenhang sind schließlich noch von Interesse Polymerisationsverfahren einer verwandten aber anderen Gattung, von denen sich repräsentative Beschreibungen z.B. in der GB-PS 2 073 761 sowie der US-PS 4 016 343 finden.

Ein signifikantes Merkmal dieser Verfahren ist, daß Trägerkatalysatoren eingesetzt werden, bei deren Herstellung man den Trägerstoff zunächst mit der Titanverbindung belädt und das dabei erhaltene Zwischenprodukt einer oxidativen Hitzebehandlung - d.h. einer Calzination - unterzieht, worauf man das so resultierende Zwischenprodukt mit der Chromverbindung belädt und das hierbei gewonnene Produkt wiederum calziniert.

Die im vorstehenden abgehandelten Polymerisationsverfahren haben zum Kernstück eine in besonderer Weise ausgestaltete Phillips-Katalyse, namentlich eine solche mit einem Trägerkatalysator, der nicht nur oxidisch vorliegendes Chrom, sondern auch oxidisch vorliegendes Titan enthält; - wobei der Gehalt an letzterem bewirkt, daß Polymerisate mit einer verbreiterten Molmassenverteilung erhalten werden, also Polymerisate, die für bestimmte Anwendungsgebiete, z.B. das Blasformverfahren, bevorzugt geeignet sind.

Die bekannten Polymerisationsverfahren der in Rede stehenden Art liefern zwar Polymerisate mit einer verbreiterten Molmassenverteilung, doch ist diese oftmals nicht wünschenswert breit genug und/oder es entstehen Polymerisate mit unbefriedigenden morphologischen Eigenschaften, z.B. einem hohen Gehalt an staubförmigen Partikeln.

Hier setzt die Aufgabe an, die zur vorliegenden Erfindung geführt hat: Ein Verfahren der eingangs definierten Art aufzuzeigen, das mit dem vorstehend beschriebenen Nachteil nicht oder in erheblich vermindertem Maße belastet ist

Es wurde gefunden, daß diese Aufgabe gelöst werden kann, wenn man bei dem in Rede stehenden Polymerisationsverfahren

(1) einen Trägerkatalysator einsetzt, der erhalten worden ist, indem man - jeweils in der Art und nach der Weise spezifisch - (1.1) in der ersten Stufe (1.1.1) zunächst aus (1 1.1) einem feinteiligen silikatischen trägerstoff und (1.1.1.2) einem flüssigen Alkan eine Suspension herstellt, (1 1.2) dann (1.1.2.1) die aus

2

(1.1.1) resultierende Suspension mit (1 1 2.2.) einem feinteiligen Chromtrioxid vereinigt, (1 1.3) hierauf (1.1.3.1) die aus (1.1.2) erhaltene Suspension mit (1.1.3.2) einem Alkanol vereinigt, (1.1.4) daraufhin (1.1.4 1) die in (1.1.3) entstandene Suspension mit (1.1 4 2) einer Titanverbindung der Formel Ti(OR)$_4$ - worin R steht für eine Alkyl-, eine Aryl- oder eine Cycloalkylgruppe - vereinigt, und (1 1.5) schließlich die in (1.1.4) gewonnene Suspension bis zur Trockene eindampft, und dann (1 2) in der zweiten Stufe zunächst (1 2 1) das aus der ersten Stufe (1.1) erhaltene Katalysator-Vorprodukt mit einem Stickstoffstrom behandelt, hierauf (1 2 2) das aus (1 2 1) erhaltene Zwischenprodukt in einem Sauerstoff enthaltenden Gasstrom erhitzt, und schließlich (1 2 3) das aus (1 2 2) erhaltene Zwischenprodukt mit einem Stickstoffstrom behandelt, sowie

(2) als Cokatalysator ein Lithiumalkyl verwendet

Gegenstand der vorliegenden Erfindung ist dementsprechend ein Verfahren zum Herstellen von Ethen-Homopolymerisaten sowie Ethen-Copolymerisaten mit untergeordneten Mengen an einpolymerisierten C$_3$- bis C$_{12}$-, insbesondere C$_3$- bis C$_8$- -Monoalkenen durch Polymerisation des bzw. der Monomeren bei Temperaturen von 30 bis 150, insbesondere 60 bis 120$^°$C und Drücken von 2 bis 150, insbesondere 5 bis 60 bar, durch Phillips-Katalyse mittels

(1) eines Trägerkatalysators aus einem Trägerstoff, der mit oxidisch vorliegendem Chrom sowie oxidisch vorliegendem Titan beladen ist, und

(2) eines Cokatalysators,

wobei der Trägerkatalysator (1) erhalten worden ist, indem man

(1.1) in einer ersten Stufe ein mit den gewünschten Mengen Chrom sowie Titan beladenes Katalysator-Vorprodukt (1.1) herstellt aus

(1.1.a) einem feinteiligen, porösen, silikatischen Trägerstoff,

(1.1.b) einer ausgewählten, spezifischen Chromverbindung, sowie

(1.1.c) einer ausgewählten, spezifischen Titanverbindung

und dann

(1.2) in einer zweiten Stufe das aus der ersten Stufe erhaltene Katalysator-Vorprodukt (1.1) in einem wasserfreien, Sauerstoff in einer Konzentration von über 10 Vol.-% enthaltenden Gasstrom 10 bis 1000, insbesondere 60 bis 300 Minuten auf einer Temperatur von 300 bis 900, insbesondere 400 bis 600$^°$C hält (d.h. "calziniert" bzw. "aktiviert") und so in den eigentlichen Trägerkatalysator (1) überführt.

Das erfindungsgemäße Verfahren ist dadurch gekennzeichnet, daß man

(1) einen Trägerkatalysator einsetzt, der erhalten worden ist, indem man

(1.1) in einer ersten Stufe ein Katalysator-Vorprodukt herstellt, indem man zunächst

(1.1.1) in einer ersten Unterstufe aus

(1.1.1.1) einem feinteiligen, porösen, silikatischen Trägerstoff, der einen Teilchendurchmesser von 1 bis 400, vorzugsweise 10 bis 200 $\mu$m, ein Porenvolumen von 0,5 bis 3, vorzugsweise 1 bis 2,5 cm$^3$/g sowie eine Oberfläche von 100 bis 1000, vorzugsweise 200 bis 700 m$^2$/g besitzt, und

(1.1.1.2) einem flüssig vorliegenden C$_5$- bis C$_8$-, vorzugsweise C$_6$-bis C$_7$-Alkan unter guter Durchmischung eine Suspension herstellt, mit der Maßgabe, daß auf 100 Gewichtsteile des Trägerstoffs (1.1.1.1) 150 bis 5000, vorzugsweise 200 bis 1000 Gewichtsteile des Alkan (1.1.1.2) entfallen, dann

(1.1.2) in einer zweiten Unterstufe

(1.1.2.1) die aus Unterstufe (1.1.1) resultierende Suspension mit

(1.1.2.2) einem feinteiligen, einen Teilchendurchmesser von weniger als 2000, vorzugsweise weniger als 500 $\mu$m aufweisenden Chromtrioxid (CrO$_3$)

unter weiterer guter Durchmischung vereinigt, mit der Maßgabe, daß auf 100 Gewichtsteile des Trägerstoffs (1.1.1.1) 0,1 bis 5, vorzugsweise 0,5 bis 2 Gewichtsteile Chrom aus dem Chromtrioxid (1.1.2.2) entfallen, hierauf

(1.1.3) in einer dritten Unterstufe

(1.1.3.1) die aus Unterstufe (1.1.2) erhaltene Suspension mit

(1.1.3.2) einem C$_3$- bis C$_{10}$-, vorzugsweise C$_4$- bis C$_6$-Alkanol, und insbesondere t-Butanol,

unter fortgesetzter guter Durchmischung bei einer Temperatur von 0 bis 60, vorzugsweise 10 bis 30$^°$C vereinigt, mit der Maßgabe, daß auf 100 Gewichtsteile des Trägerstoffs (1.1.1.1) 3 bis 30, vorzugsweise 5 bis 15 Gewichtsteile des Alkanols (1.1.3.2) entfallen, und das Ganze 10 bis 300, vorzugsweise 30 bis 60 Minuten bei der genannten Temperatur hält, daraufhin

(1.1.4) in einer vierten Unterstufe

(1.1.4.1) die in Unterstufe (1.1.3) entstandene Suspension mit

(1.1.4.2) einer Titanverbindung der Formel Ti(OR)$_4$ - worin R steht für eine C$_1$- bis C$_{12}$-Alkyl-, eine Aryl- oder eine Cycloalkylgruppe, vorzugsweise eine C$_2$- bis C$_4$-Alkylgruppe, und insbesondere die iso-Propylgruppe -,

EP 0 243 660 B1

unter dauernder guter Durchmischung bei einer Temperatur von 0 bis 60, vorzugsweise 10 bis 30 °C vereinigt, mit der Maßgabe, daß auf 100 Gewichtsteile des Trägerstoffs (1.1.1.1) 0,1 bis 10, vorzugsweise 1 bis 6 Gewichtsteile Titan aus der Titanverbindung (1.1.4.2) entfallen, und das Ganze 5 bis 300, vorzugsweise 20 bis 60 Minuten bei der genannten Temperatur hält, und schließlich

(1.1.5) in einer fünften Unterstufe

die in Unterstufe (1.1.4) gewonnene Suspension bei einer Temperatur von nicht mehr als 150, vorzugsweise nicht mehr als 80 °C - gegebenenfalls unter vermindertem Druck - bis zur Trockene eindampft, und dann

(1.2) in einer zweiten Stufe das aus der ersten Stufe (1.1) erhaltene Katalysator-Vorprodukt in den eigentlichen Trägerkatalysator überführt, indem man zunächst

(1.2.1) in einer ersten Unterstufe das aus der ersten Stufe (1.1) erhaltene Katalysator-Vorprodukt in einem wasserfreien Stickstoffstrom 60 bis 500, insbesondere 100 bis 300 Minuten auf einer Temperatur von 150 bis 300, insbesondere 200 bis 270 °C hält, hierauf

(1.2.2) in einer zweiten Unterstufe das aus Unterstufe (1.2.1) erhaltene Zwischenprodukt in einem wasserfreien, Sauerstoff in einer Konzentration von über 10 Vol.-% enthaltenden Gasstrom 10 bis 1000, insbesondere 60 bis 300 Minuten auf einer Temperatur von 300 bis 900, insbesondere 400 bis 600 °C hält, und schließlich

(1.2.3) in einer dritten Unterstufe das aus Unterstufe (1.2.2) erhaltene Zwischenprodukt in einem wasserfreien Stickstoffstrom 10 bis 300, insbesondere 30 bis 150 Minuten auf einer Temperatur von 50 bis 400, insbesondere 100 bis 270 °C hält,

sowie

(2) als Cokatalysator einsetzt ein Lithiumalkyl der Formel $LiR^1$ - worin $R^1$ steht für eine $C_1$- bis $C_{12}$-, insbesondere eine $C_2$-bis $C_4$-Alkylgruppe -, mit der Maßgabe, daß das Atomverhältnis Chrom im Trägerkatalysator (1): Lithium im Cokatalysator (2) größer als 1 : 100 und insbesondere 1 : 1 bis 1 : 20 ist.

Zu dem erfindungsgemäßen Polymersiationsverfahren in seinem Gesamtaspekt ist das Foglende zu sagen:

Das Polymersiationsverfahren als solches kann - unter Beachtung der erfindungsgemäßen Besonderheit - in praktisch allen einschlägig üblichen technologischen Ausgestaltungen durchgeführt werden, etwa als diskontinuierliches, taktweises oder kontinuierliches Verfahren, sei es z.B. als Suspensions-Polymerisationsverfahren oder Trockenphasen-Polymerisationsverfahren im gerührten oder gewirbelten Bett. Die erwähnten technologischen Ausgestaltungen - mit anderen Worten: die technologischen Varianten der Polymerisation von Olefinen nach Phillips - sind aus der Literatur und Praxis wohlbekannt, so daß sich insoweit nähere Ausführungen zu Ihnen erübrigen.

Es ist indes hervorzuheben, daß die erfindungsgemäße Arbeitsweise vorzugsweise durchgeführt wird in Rahmen eines Verfahrens zum kontinuierlichen Herstellen partikelförmiger Homopolymerisate oder Copolymerisate durch Polymerisation des bzw. der Monomeren in einem flüssig vorliegenden $C_4$-bis $C_5$-Alkan - worin sich das zu polymerisierende Monomere bzw. Monomerengemisch in gelöster Form, das gebildete partikelförmige Polymerisat in suspendierter Form befinden - als Reaktionsmedium, - gewünschtenfalls - in Gegenwart eines Antistatikums als Wandbelagverhinderungsmittel ("antifouling agent") sowie - gegebenenfalls - von Wasserstoff als Molekulargewichtsregler, unter Führen des Reaktionsgemischs als Kreisstrom, welchem die Ausgangsstoffe zugegeben werden und das gebildete partikelförmige Polymerisat entzogen wird. Polymerisationsverfahren dieser Gattung, d.h. Verfahren zum Herstellen von Homo- und Copolymerisaten des Ethylens durch Suspensionspolymerisation des bzw. der Monomeren in einem flüssig vorliegenden Alkan, sind in mannigfachen Ausgestaltungen bekannt; hierzu kann im gegebenen Zusammenhang auf die in den GB-PS 841 263 und 1 435 965 sowie den US-PS 3 242 150 und 4 007 321 beschriebenen Arbeitsweisen, als exemplarischen Beispielen, verwiesen werden.

Weiterhin ist noch zu bemerken, daß der neue Trägerkatalysator (1) - wie entsprechende bekannte Katalysatoren - z.B. außerhalb oder innerhalb des Polymerisationsraumes mit dem Cokatalysator (2) zusammengebracht werden kann; im letztgenannten Fall etwa durch räumlich getrennten Eintrag der Komponenten, die im übrigen in Form einer Suspension (Katalysator) bzw. Lösung (Cokatalysator) gehandhabt werden können.

Schließlich ist noch zu sagen, daß sich das neue Polymerisationsverfahren vornehmlich zum Herstellen solcher Ethen-Homopolymerisate sowie Ethen-Copolymerisate - letztere insbesondere mit Propen, Buten-1, Hexen-1, 4-Methylpenten-1 bzw. Octen-1 - eignet, die einen mittleren Schmelzindex und eine breite Molmassenverteilung bei einem geringen Anteil feinteiligen Polymerisats haben sollen, also Polymerisaten, wie zie z.B. beim Blasformverfahren bevorzugt Anwendung finden. Die Regelung der Molekulargewichte der Polymerisate ist dabei durch die Mitverwendung von Molekulargewichtsreglern, wie insbesondere Wasser-

4

stoff, mit gutem Erfolg möglich.

Zu dem erfindungsgemäß einzusetzenden neuen Trägerkatalysator (1) selbst ist das Folgende zu sagen:

Seine Herstellung erfolgt in zwei Stufen, die oben sowie nachstehend mit (1.1) und (1.2) bezeichnet sind.

In der ersten Stufe (1.1) erfolgt die Herstellung des Katalysator-Vorprodukts über fünf Unterstufen (1.1.1), (1.1.2), (1.1.3), (1.1.4) und (1.1.5), deren Durchführung für den Fachmann ohen Schwierigkeiten und ohne weiteres möglich ist. Er wird dabei zweckmäßigerweise mit einer Apparatur arbeiten, die eine dauernde, möglichst homogene Durchmischung der jeweiligen Ansätze unter einer inerten Schutzatmosphäre, wie Stickstoffatmosphäre, erlaubt. Er wird ferner zweckmäßigerweise in den Unterstufen (1.1.3) sowie (1.1.4) das Alkanol (1.1.3.2) bzw. die Titanverbindung (1.1.4.2) nicht schlagartig, sondern eher allmählich in die jeweils vorliegende Suspension (1.1.3.1) bzw. (1.1.4.1) einbringen. Schließlich wird er den Eindampfvorgang in Unterstufe (1.1.5) schonend gestalten, - wozu sich z.B. Rotationsverdampfer anbieten.

In der zweiten Stufe (1.2) wird das aus der ersten Stufe (1.1) erhaltene Katalysator-Vorprodukt im Zuge von drei Unterstufen (1.2.1), (1.2.2.) und (1.2.3) in den eigentlichen Trägerkatalysator übergeführt. Auch die Duchführung dieser Verfahrensschritte ist für den Fachmann ohne Schwierigkeiten und ohne weiteres möglich. Die hierzu zweckmäßigen Vorrichtungen und Arbeitsmethoden sind die zum "Calzinieren" bzw. "Aktivieren" von Phillips-Trägerkatalysatoren üblichen und an sich wohlbekannten. Dies bedeutet für die zweite Unterstufe (1.2.2), daß Bedingungen zu wählen sind, die gewährleisten, daß im fertigen Trägerkatalysator das Chrom, zumindest teilweise, nicht in einem anderen als dem sechswertigen Zustand vorliegt; - insoweit ist hier also gegenüber dem Stand der Technik keine Besonderheit gegeben. Die erfindungsgemäßen Besonderheiten der zweiten Stufe (1.2) liegen vielmehr in der vorgeschalteten Unterstufe (1.2.1) sowie der nachgeschalteten Unterstufe (1.2.3), ohne die die erfindungsgemäße Zielsetzung nicht zu erreichen ist. Zur letztgenannten Unterstufe (1.2.3) ist zu bemerken, daß sie - nicht nötigerweise, aber aus ökonomischen Gründen - zweckmäßigerweise mit einem Abkühlvorgang im Bereich der angegebenen kritischen Zeit- und Temperaturspanne verbunden wird.

Die stoffliche Seite des neuen Trägerkatalysators (1) betreffend ist zu sagen, daß bei seiner Herstellung - generell - die Anwesenheit von Wasser soweit wie möglich ausgeschlossen werden sollte. Dies beginnt beim Trägerstoff (1.1.1.1), den man vor seinem Einsatz - wie einschlägig üblich - scharf trocknen sollte, z.B. für 8 Stunden bei einer Temperatur von 140 $^\circ$C unter einem Druck von 20 Torr. Das gleichfalls einzusetzende Alkan (1.1.1.2) - hier eignet sich vor allen n-Heptan, aber auch z.B. n-Pentan, n-Hexan und n-Oktan sind geeignet - sollte möglichst weniger als 0,1 Gew.-% Wasser enthalten. Der Wassergehalt des Chromtrioxids (1.1.2.2) sollte 1 Gew.-% nicht übersteigen. Wie sich gezeigt hat, sind bei den einzusetzenden Alkanolen (1.1.3.2) - hier eignet sich vor allem t-Butanol, aber auch z.B. 2-Methyl-2-butanol, 2-Methyl-2-pentanol, 3-Methyl-3-pentanol, sowie 2,3-Dimethyl-2-butanol sind geeignet - ebenfalls Wassergehalte bis zu maximal 1 Gew.-% zu tolerieren. die schließlich zu verwendende Titanverbindung (1.1.4.2) ist relativ stark hydrolyseempfindlich; sie enthält aus diesem Grunde per se allenfalls minimale Mengen an Wasser. Für den erfindungsgemäßen Zweck geeignete Titanverbindungen sind - neben dem besonderes zu bevorzugenden Titan(IV)-tetraisopropylat - beispielsweise auch Titan(IV)-tetraethylat, Titan(IV)-tetrapropylat sowie Titan(IV)-tetrabutylat.

Bei dem erfindungsgemäßen Polymerisationsverfahren ist nicht nur ein Trägerkatalysator (1) einzusetzen, sondern auch ein Cokatalysator (2) in Gestalt eines bestimmten Lithiumalkyls. Namentliche Beispiele für besonders geeignete einschlägige Cokatalysatoren sind n-Butyllithium, sec.-Butyllithium sowie tert.-Butyllithium; geeignet sind aber auch z.B. Ethyllithium, n-Propyllithium und Isopropyllithium.

Beispiel

Herstellen des Trägerkatalysators (1)

(1.1) In einer ersten Stufe wird ein Katalysator-Vorprodukt hergestellt, indem man zunächst

(1.1.1) in einer ersten Unterstufe aus

(1.1.1.1) einem feinteiligen, porösen, silikatischen Trägerstoff, der einen Teilchendurchmesser von 30 bis 100 $\mu$m, ein Porenvolumen von 1,75 cm$^3$/g sowie eine Oberfläche von 320 m$^2$/g besitzt (8 Stunden bei 140 $^\circ$C und 20 Torr getrocknet), und

(1.1.1.2) wasserfreiem n-Heptan

unter Argonatmosphäre sowie guter Durchmischung mittels Rühren eine Suspension herstellt, mit der Maßgabe, daß auf 100 Gewichtsteile des Trägerstoffs (1.1.1.1) 400 Gewichtsteile des Alkans (1.1.1.2) entfallen, dann

(1.1.2) in einer zweiten Unterstufe

(1.1.2.1) die aus Unterstufe (1.1.1) resultierende Suspension

(1.1.2.2) mit einem feinteiligen, einen Teilchendurchmesser von weniger als 500 $\mu$m aufweisenden Chromtrioxid ($CrO_3$)

unter weiterer guter Durchmischung mittels Rühren vereinigt, mit der Maßgabe, daß auf 100 Gewichtsteile des Trägerstoffs (1.1.1.1) 1 Gewichtsteil Chrom aus dem Chromtrioxid (1.1.2.2) entfällt, hierauf

(1.1.3) in einer dritten Unterstufe

(1.1.3.1) die aus Unterstufe (1.1.2) erhaltene Suspension mit

(1.1.3.2) t-Butanol (25 $^{\circ}$C warm)

unter fortgesetzter guter Durchmischung mittels Rühren bei einer Temperatur von 20$^{\circ}$ vereinigt, mit der Maßgabe, daß auf 100 Gewichtsteile des Trägerstoffs (1.1.1.1) 10 Gewichtsteile des Alkanols (1.1.3.2) entfallen, und das Ganze 45 Minuten bei der ganannten Temperatur hält, daraufhin

(1.1.4) in einer vierten Unterstufe

(1.1.4.1) die in Unterstufe (1.1.3) entstandene Suspension mit

(1.1.4.2) einer Titanverbindung der Formel $Ti(OR)_4$ - worin R steht für die iso-Propylgruppe - unter dauernder guter Durchmischung mittels Rühren bei einer Temperatur von 20$^{\circ}$C vereinigt, mit der Maßgabe, daß auf 100 Gewichtsteile des Trägerstoffs (1.1.1.1) 4 Gew.-Teile Titan aus der Titanverbindung (1.1.4.2) entfallen, und das Ganze 30 Minuten bei der genannten Temperatur hält, und schließlich

(1.1.5) in einer fünften Unterstufe die in Unterstufe (1.1.4) gewonnene Suspension bei einer Temperatur von bis zu 80 $^{\circ}$C unter vermindertem Druck (bis zu 20 Torr) in einem Rotationsverdampfer bis zur Trockene eindampft.

(1.2) In einer zweiten Stufe wird das aus der ersten Stufe (1.1) erhaltene Katalysator-Vorprodukt in den eigentlichen Trägerkatalysator überführt, indem man - jeweils mittels eines Fließbettes - zunächst -

(1.2.1) in einer ersten Unterstufe das aus der ersten Stufe (1.1) erhaltene Katalysator-Vorprodukt in einem wasserfreien Stickstoffstrom 120 Minuten auf einer Temperatur von 250$^{\circ}$C hält, hierauf

(1.2.2) in einer zweiten Unterstufe das aus Unterstufe (1.2.1) erhaltene Zwischenprodukt in einem wasserfreien Luftstrom 60 Minuten auf einer Temperatur von 500$^{\circ}$C hält, und schließlich

(1.2.3) in einer dritten Unterstufe das aus Unterstufe (1.2.2) erhaltene Zwischenprodukt in einem wasserfreien Stickstoffstrom 60 Minuten auf einer von 250 auf 100$^{\circ}$C sinkenden Temperatur hält.

Der so erzeugte Trägerkatalysator enthält 1 Gew.-% Chrom sowie 4 Gew.-% Titan.

Polymerisation mittels der Trägerkatalysators (1) sowie des Cokatalysators (2)

Ein Stahlautoklav mit 1 Liter Nutzvolumen und mit Rührer wird auf 95$^{\circ}$C erhitzt und 10 Minuten mit trockenem Stickstoff gespült. Danach wird 1 ml einer 10 g n-Butyllithium als Cokatalysator (2) pro 1 n-Heptan enthaltenden Lösung und 500 ml Isobutan in den Reaktor eingeführt. Durch Zufuhr von Ethen wird dann der Druck auf 40 bar erhöht und nach Einbringen von 80 mg des Trägerkatalysators (1) mit Hilfe einer Schleuse - entsprechend einem Atomverhältnis Chrom im Trägerkatalysator : Lithium im Cokatalysator von 1 : 10 - während der Polymerisation aufrechterhalten. Nach 60 Minuten bei einer Polymerisationstemperatur von 95 ± 2$^{\circ}$C wird der Autoklav unter Verdampfen des Isobutans und des nicht umgesetzten Ethens entspannt und das erhaltene Polymerisat entnommen.

Nähere Angaben zu dem Verfahrensprodukt sind der unten stehenden Tabelle zu entnehmen.

Vergleichsversuch 1

Herstellen des Trägerkatalysators (1)

(1.1) In einer ersten Stufe wird ein Katalysator-Vorprodukt hergestellt, indem man zunächst

(1.1.1) in einer ersten Unterstufe aus

(1.1.1.1) einem feinteiligen, porösen, silikatischen Trägerstoff, der einen Teilchendurchmesser von 30 bis 100 $\mu$m, ein Porenvolumen von 1,75 $cm^3$/g sowie eine Oberfläche von 320 $m^2$/g besitzt (8 Stunden bei 140$^{\circ}$C und 20 Torr getrocknet), und

(1.1.1.2) wasserfreiem n-Heptan

unter Argonatmosphäre sowie guter Durchmischung mittels Rühren eine Suspension herstellt, mit der Maßgabe, daß auf 100 Gewichtsteile des Trägerstoffs (1.1.1.1) 400 Gewichtsteile des Alkans (1.1.1.2) entfallen, dann

(1.1.2) in einer zweiten Unterstufe

(1.1.2.1) die in Unterstufe (1.1.1) entstandene Suspension mit

(1.1.2.2) einer Titanverbindung der Formel $Ti(OR)_4$ - worin R steht für die iso-Propylgruppe -

unter dauernder guter Durchmischung mittels Rühren bei einer Temperatur von 20$^{\circ}$C vereinigt, mit der Maßgabe, daß auf 100 Gewichtsteile des Trägerstoffs (1.1.1.1) 4 Gew.-Teile Titan aus der Titanverbindung (1.1.2.2) entfallen, und das ganze 30 Minuten bei der genannten Temperatur hält, hierauf

(1.1.3) in einer dritten Unterstufe die in Unterstufe (1.1.2) gewonnene Suspension bei einer Temperatur von bis zu 80° C unter vermindertem Druck (bis zu 20 Torr) in einem Rotationsverdampfer bis zur Trockene eindampft, daraufhin

(1.1.4) in einer vierten Unterstufe das aus Unterstufe (1.1.3) erhaltene Zwischenprodukt - mittels eines Fließbettes - in einem wasserfreien Luftstrom 60 Minuten auf einer Temperatur von 750° C hält, alsdann

(1.1.5) in einer fünften Unterstufe aus

(1.1.5.1) dem in Unterstufe (1.1.4) entstandene Zwischenprodukt und

(1.1.5.2) wasserfreiem n-Heptan

unter Argonatmosphäre sowie guter Durchmischung mittels Rühren eine Suspension herstellt, mit der Maßgabe, daß auf 100 Gewichtsteile des Trägerstoffs (1.1.1.1) 400 Gewichtsteile des Alkans (1.1.5.2) entfallen, jetzt

(1.1.6) in einer sechsten Unterstufe

(1.1.6.1) die in Unterstufe (1.1.5) entstandene Suspension mit

(1.1.6.2) Bis-tert.-butylchromat

unter dauernder guter Durchmischung mittels Rühren bei einer Temperatur von 20° C vereinigt, mit der Maßgabe, daß auf 100 Gewichtsteile des Trägerstoffs (1.1.1.1) 1 Gew.-Teil Chrom aus der Chromverbindung (1.1.6.2) entfällt, und das Ganze 30 Minuten bei der genannten Temperatur hält, und schließlich

(1.1.7) in einer siebenten Unterstufe die in Unterstufe (1.1.6) gewonnene Suspension bei einer Temperatur von bis zu 80° C unter vermindertem Druck (bis zu 20 Torr) in einem Rotationsverdampfer bis zur Trockene eindampft.

(1.2) In einer zweiten Stufe wird das aus der ersten Stufe (1.1) erhaltene Katalysator-Vorprodukt in den eigentlichen Trägerkatalysator überführt, indem man - mittels eines Fließbettes - dieses Vorprodukt in einem wasserfreien Luftstrom 60 Minuten auf einer Temperatur von 500° C hält.

Der so erzeugte Trägerkatalysator enthält 1 Gew.-% Chrom sowie 4 Gew.-% Titan.

Polymerisation mittels des Trägerkatalysators (1)

Sie erfolgt in Identität zum Beispiel.

Nähere Angaben zu dem so erhaltenen Verfahrensprodukt sind der unten stehenden Tabelle zu entnehmen.


Vergleichsversuch 2


Herstellen des Trägerkatalysators (1)


(1.1) In einer ersten Stufe wird ein Katalysator-Vorprodukt hergestellt, indem man

(1.1.1) in einer ersten Unterstufe aus

(1.1.1.1) einem feinteiligen, porösen, silikatischen Trägerstoff, der einem Teilchendurchmesser von 30 bis 100 $\mu$m, ein Porenvolumen von 1,75 cm$^3$/g sowie eine Oberfläche von 320 m$^2$/g besitzt (8 Stunden bei 140° C und 20 Torr getrocknet), und

(1.1.1.2) wasserfreiem n-Heptan

unter Argonatmosphäre sowie guter Durchmischung mittels Rühren eine Suspension herstellt, mit der Maßgabe, daß auf 100 Gewichtsteile des Trägerstoffs (1.1.1.1) 400 Gewichtsteile des Alkans (1.1.1.2) entfallen, und

(1.1.2) in einer zweiten Unterstufe

(1.1.2.1) wasserfreies Heptan,

(1.1.2.2) eine Titanverbindung der Formel Ti(OR)$_4$ - worin R steht für die iso-Propylgruppe - sowie

(1.1.2.3) Bis-tert.-butylchromat

unter dauernder guter Durchmischung mittels Rühren bei einer Temperatur von 20° C vereinigt, mit den Maßgaben, daß auf 100 Gewichtsteile Heptan insegesamt 15 Gewichtsteile der Titanverbindung (1.1.2.2) plus des Bis-tert.-butyl-chromats (1.1.2.3) entfallen und das Gewichtsverhältnis Titan aus der Titanverbindung (1.1.2.2) zu Chrom aus der Chromverbindung (1.1.2.3) 4 : 1 beträgt, und das Ganze 40 Minuten unter Rückfluß erhitzt (ca. 98° C), hierauf

(1.1.3) in einer dritten Unterstufe

(1.1.3.1) die aus Unterstufe (1.1.1) resultierende Suspension mit

(1.1.3.2) dem aus Unterstufe (1.1.2) erhaltenen Produkt

unter dauernder guter Durchmischung mittels Rühren bei einer Temperatur von 20° C vereinigt, mit der Maßgabe, daß auf 100 Gewichtsteile des Trägerstoffs (1.1.1.1) 4 Gew.-Tiele Titan aus der Titanverbin-

EP 0 243 660 B1

dung (1.1.2.2.) entfallen, und das Ganze 30 Minuten bei der genannten Temperatur hält, und schließlich (1.1.4) in einer vierten Unterstufe die in Unterstufe (1.1.3) gewonnene Suspension bei einer Temperatur von bis zu 80°C unter vermindertem Druck (bis zu 20 Torr) in einem Rotationsverdampfer bis zur Trockene eindampft.

(1.2) In einer zweiten Stufe wird das aus der ersten Stufe (1.1) erhaltene Katalysator-Vorprodukt in den eigentlichen Trägerkatalysator überführt, indem man - mittels eines Fließbettes - dieses Vorprodukt in einem wasserfreien Luftstrom 60 Minuten auf einer Temperatur von 500°C hält.

Der so erzeugte Trägerkatalysator enthält 1 Gew.-% Chrom sowie 4 Gew.-% Titan.

Polymerisations mittels des Trägerkatalysators (1)

Sie erfolgt in Identität zum Beispiel.

Nähere Angaben zu dem hierbei erhaltenen Verfahrensprodukt sind der unten stehenden Tabelle zu entnehmen.

Vergleichsversuch 3

Herstellen des Trägerkatalysators (1)

(1.1) In einer ersten Stufe wird ein Katalysator-Vorprodukt hergestellt, indem man zunächst

(1.1.1) in einer ersten Unterstufe aus

(1.1.1.1) einem feinteiligen, porösen, silikatischen Trägerstoff, der 1 Gew.-% Chrom als Chromtrioxid enthält und unter dem Handelsnamen 969 MS von der Firma Grace GmbH erhältlich ist (8 Stunden bei 140°C und 20 Torr getrocknet), und

(1.1.1.2) wasserfreiem n-Heptan

unter Argonatmosphäre sowie guter Durchmischung mittels Rühren eine Suspension herstellt, mit der Maßgabe, daß auf 100 Gewichtsteile des Trägerstoffs (1.1.1.1) 400 Gewichtsteile des Alkans (1.1 1.2) entfallen, dann

(1.1.2) in einer zweiten Unterstufe

(1.1 2.1) die in Unterstufe (1.1.1) entstandene Suspension mit

(1.1.2 2) einer Titanverbindung der Formel $Ti(OR)_4$ - worin R steht für die iso-Propylgruppe - unter dauernder guter Durchmischung mittels Rühren bei einer Temperatur von 20°C vereinigt, mit der Maßgabe, daß auf 100 Gewichtsteile des Trägerstoffs (1.1.1.1) 4 Gew.-Teile Titan aus der Titanverbindung (1.1 2 2) entfallen, und das Ganze 30 Minuten bei der genannten Temperatur hält, und schließlich (1.1 3) in einer dritten Unterstufe die in Unterstufe (1.1.2) gewonnene Suspension bei einer Temperatur von bis zu 80°C unter vermindertem Druck (bis zu 20 Torr) in einem Rotationsverdampfer bis zu Trockene eindampft.

(1.2) In einer zweiten Stufe wird das aus der ersten Stufe (1.1) erhaltene Katalysator-Vorprodukt in den eigentlichen Trägerkatalysator überführt, indem man - mittels eines Fließbettes - dieses Vorprodukt in einem wasserfreien Luftstrom 60 Minuten auf einer Temperatur von 500°C hält.

Der so erzeugte Trägerkatalysator enthält 1 Gew.-% Chrom sowie 4 Gew.-% Titan.

Polymerisation mittels des Trägerkatalysators (1)

Sie erfolgt in Identität zum Beispiel.

Nähere Angaben zu dem so erhaltenen Verfahrensprodukt sind der nachstehenden Tabelle zu entnehmen.

8

Tabelle

| | Produktivität [a] (gP/gKat.) | HLMI [b] (g/10Min.) | Mw/Mn [c] | 250 µm [d] % |
|---|---|---|---|---|
| Beispiel | 4000 | 6,1 | 36,1 | 0,8 |
| Vgl.-Vers. 1 | 3700 | 7,9 | 23,0 | 5,0 |
| " " 2 | 2900 | 7,3 | 22,7 | 3,1 |
| " " 3 | 2600 | 6,0 | 32,0 | 14,7 |

[a]     Gramm Polymerisat pro Gramm Trägerkatalysator (1).

[b]     Nach DIN 53 735 bei 190°C/21,6 Kp.

[c]     Quotient aus Gewichts- und Zahlmittelwert der Molekularmasse (Mw/Mn) durch Gel-Permeations-Chromatographie bestimmt. (Große  Werte für Mw/Mn entsprechen einer breiten Molmassenverteilung und umgekehrt).

[d]     Teilchendurchmesser des Polymerisats gemäß Siebanalyse.

Die in den Vergleichsversuchen erhaltenen Verfahrensprodukte besitzen eine engere Molmassenverteilung und einen deutlich höheren Gehalt an staubförmigen Partikeln als das erfindungsgemäß hergestellte Verfahrensprodukt.

**Patentansprüche**

1.   Verfahren zum Herstellen von Ethen-Homopolymerisaten sowie Ethen-Copolymerisaten mit untergeordneten Mengen an einpolymerisierten $C_3$- bis $C_{12}$-$\alpha$-Monoalkenen durch Polymerisation des bzw. der Monomeren bei Temperaturen von 30 bis 150°C und Drücken von 2 bis 150 bar, durch Phillips-Katalyse mittels

(1) eines Trägerkatalysators aus einem Trägerstoff, der mit oxidisch vorliegendem Chrom sowie oxidisch vorliegendem Titan beladen ist, und
(2) eines Cokatalysators,

wobei der Trägerkatalysator (1) erhalten worden ist, indem man

(1.1) in einer ersten Stufe ein mit den gewünschten Mengen Chrom sowie Titan beladenes Katalysator-Vorprodukt (1.1) herstellt aus
(1.1.a) einem feinteiligen, porösen, silikatischen Trägerstoff,
(1.1.b) einer ausgewählten, spezifischen Chromverbindung, sowie
(1.1.c) einer ausgewählten, spezifischen Titanverbindung,

und dann

(1.2) in einer zweiten Stufe das aus der ersten Stufe erhaltene Katalysator-Vorprodukt (1.1) in einem wasserfreien, Sauerstoff in einer Konzentration von über 10 Vol.-% enthaltenden Gasstrom 10 bis 1000 Minuten auf einer Temperatur von 300 bis 900°C hält und so in den eigentlichen Trägerkatalysator (1) überführt,
dadurch gekennzeichnet, daß man
(1) einen Trägerkatalysator einsetzt, der erhalten worden ist, indem man
(1.1) in einer ersten Stufe ein Katalysator-Vorprodukt herstellt, indem man zunächst

9

(1.1.1) in einer ersten Unterstufe aus

(1.1.1.1) einem feinteiligen, porösen, silikatischen Trägerstoff, der einem Teilchendurchmesser von 1 bis 400 $\mu$m, ein Porenvolumen von 0,5 bis 3 cm$^3$/g sowie eine Oberfläche von 100 bis 1000 m$^2$/g besitzt, und

(1.1.1.2) einem flüssig vorliegenden C$_5$- bis C$_8$-Alkan

unter guter Durchmischung eine Suspension herstellt, mit der Maßgabe, daß auf 100 Gewichtsteile des Trägerstoffs (1.1.1.1) 150 bis 5000 Gewichtsteile des Alkans (1.1.1.2) entfallen, dann

(1.1.2) in einer zweiten Unterstufe

(1.1.2.1) die aus (1.1.1) resultierende Suspension

(1.1.2.2) mit einem feinteiligen, einen Teilchendurchmesser von weniger als 2000 $\mu$m aufweisenden Chromtrioxid (CrO$_3$)

unter weiterer guter Durchmischung vereinigt, mit der Maßgabe, daß auf 100 Gewichtsteile des Trägerstoffs (1.1.1.1) 0,1 bis 5 Gewichtsteile Chrom aus dem Chromtrioxid (1.1.2.2) entfallen, hierauf

(1.1.3) in einer dritten Unterstufe

(1.1.3.1) die aus Unterstufe (1.1.2) erhaltene Suspension mit

(1.1.3.2) einem C$_3$- bis C$_{10}$-Alkanol

unter fortgesetzter guter Durchmischung bei einer Temperatur von 0 bis 60 $^\circ$C vereinigt, mit der Maßgabe, daß auf 100 Gewichtsteile des Trägerstoffs (1.1.1.1) 3 bis 30 Gewichtsteile des Alkanols (1.1.3.2) entfallen, und das Ganze 10 bis 300 Minuten bei der genannten Temperatur hält, daraufhin

(1.1.4) in einer vierten Unterstufe

(1.1.4.1) die in Unterstufe (1.1.3) entstandene Suspension mit

(1.1.4.2) einer Titanverbindung der Formel Ti(OR)$_4$ - worin R steht für eine C$_1$- bis C$_{12}$-Alkyl-, eine Aryl- oder eine Cycloalkylgruppe-, unter dauernder guter Durchmischung bei einer Temperatur von 0 bis 60 $^\circ$C vereinigt, mit der Maßgabe, daß auf 100 Gewichtsteile des Trägerstoffs (1.1.1.1) 0,1 bis 10 Gewichtsteile Titan aus der Titanverbindung (1.1.4.2) entfallen, und das Ganze 5 bis 300 Minuten bei der genannten Temperatur hält, und schließlich

(1.1.5) in einer fünften Unterstufe die in Unterstufe (1.1.4) gewonnene Suspension bei einer Temperatur von nicht mehr als 150 $^\circ$C - gegebenenfalls unter vermindertem Druck - bis zur Trockne eindampft,

und dann

(1.2) in einer zweiten Stufe das aus der ersten Stufe (1.1) erhaltene Katalysator-Vorprodukt in den eigentlichen Trägerkatalysator überführt, indem man zunächst

(1.2.1) in einer ersten Unterstufe das aus der ersten Stufe (1.1) erhaltene Katalysator-Vorprodukt in einem wasserfreien Stickstoffstrom 60 bis 500 Minuten auf einer Temperatur von 150 bis 300 $^\circ$C hält, hierauf

(1.2.2) in einer zweiten Unterstufe das aus Unterstufe (1.2.1) erhaltene Zwischenprodukt in einem wasserfreien, Sauerstoff in einer Konzentration von über 10 Vol.-% enthaltenden Gasstrom 10 bis 1000 Minuten auf einer Temperatur von 300 bis 900 $^\circ$C hält, und schließlich

(1.2.3) in einer dritten Unterstufe das aus Unterstufe (1.2.2) erhaltene Zwischenprodukt in einem wasserfreien Stickstofftrom 10 bis 300 Minuten auf einer Temperatur von 50 bis 400 $^\circ$C hält,

sowie

(2) als Cokatalysator einsetzt ein Lithiumalkyl der Formel LiR$^1$ - worin R$^1$ steht für eine C$_1$- bis C$_{12}$-Alkylgruppe -,

mit der Maßgabe, daß das Atomverhältnis Chrom im Trägerkatalysator (1) : Lithium im Cokotalysator (2) größer als 1 : 100 ist.

## Claims

1. A process for preparing ethene homopolymers and ethene copolymers with minor amounts of copolymerized C$_3$-C$_{12}$-$\alpha$-monoalkenes by polymerizing the monomer(s) at from 30 to 150 $^\circ$C and from 2 to 150 bar by Phillips catalysis using

(1) a supported catalyst composed of a carrier material which is loaded with chromium in oxide form and titanium in oxide form and

(2) a cocatalyst,

EP 0 243 660 B1

the supported catalyst (1) having been obtained by

(1.1) preparing in a first stage a catalyst intermediate (1.1) loaded with desired amounts of chromium and titanium from

(1.1.a) a finely divided porous silicate carrier material,

(1.1.b) a selected, specific chromium compound and

(1.1.c) a selected, specific titanium compound

and then

(1.2) in a second stage maintaining the catalyst intermediate (1.1) obtained in the first stage at from 300 to 900°C in an anhydrous gas stream which contains oxygen in a concentration of over 10% by volume for from 10 to 1,000 minutes and thereby converting it into the actual supported catalyst (1), which comprises

(1) using a supported catalyst obtained by

(1.1) preparing in a first stage a catalyst intermediate by first

(1.1.1) preparing in a first substage a suspension from

(1.1.1.1) a finely divided porous silicate carrier material which has a particle diameter of 1 to 400 $\mu$m, a pore volume of from 0.5 to 3 $cm^3$/g and a surface area of from 100 to 1,000 $m^2$/g, and

(1.1.1.2) a $C_5$-$C_8$-alkane which is present in liquid form with thorough mixing, subject to the proviso that for every 100 parts by weight of carrier material (1.1.1.1), from 150 to 5,000 parts by weight of alkane (1.1.1.2) are present, then

(1.1.2) in a second substage

(1.1.2.1) combining the suspension resulting from substage (1.1.1) with

(1.1.2.2) a finely divided chromium trioxide ($CrO_3$) having a particle diameter of less than 2,000 $\mu$m with further thorough mixing, subject to the proviso that, for every 100 parts by weight of carrier material (1.1.1.1), from 0.1 to 5 parts by weight of chromium are present from chromium trioxide (1.1.2.2), thereupon

(1.1.3) in a third substage

(1.1.3.1) combining the suspension obtained from substage (1.1.2) with

(1.1.3.2) a $C_3$-$C_{10}$-alkanol with continued thorough mixing at from 0 to 60°C, subject to the proviso that, for every 100 parts by weight of carrier material (1.1.1.1), from 3 to 30 parts by weight of alkanol (1.1.3.2) are present, and maintaining the whole at said temperature for from 10 to 300 minutes, thereafter

(1.1.4) in a fourth substage

(1.1.4.1) combining the suspension formed in substage (1.1.3) with

(1.1.4.2) a titanium compound of the formula $Ti(OR)_4$, where R is $C_1$-$C_{12}$-alkyl, aryl or cycloalkyl, with uninterrupted thorough mixing at from 0 to 60°C, subject to the proviso that, for every 100 parts by weight of carrier material (1.1.1.1), from 0.1 to 10 parts by weight of titanium are present from titanium compound (1.1.4.2), and maintaining the whole at said temperature for from 5 to 300 minutes, finally

(1.1.5) in a fifth substage evaporating the suspension obtained in substage (1.1.4) to dryness at not more than 150°C with or without reduced pressure,

and then

(1.2) in a second stage converting the catalyst intermediate obtained from the first stage (1.1) into the actual supported catalyst by first

(1.2.1) in a first substage maintaining the catalyst intermediate obtained from the first stage (1.1) at from 150 to 300°C in an anhydrous nitrogen stream for from 60 to 500 minutes, thereupon

(1.2.2) in a second substage maintaining the intermediate obtained from substage (1.2.1) at from 300 to 900°C in an anhydrous gas stream which contains oxygen in a concentration of over 10% by volume for from 10 to 1,000 minutes, and finally

(1.2.3) in a third substage maintaining the intermediate from substage (1.2.2) at from 50 to 400°C in an anhydrous nitrogen stream for from 10 to 300 minutes,

and

(2) using as cocatalyst an alkyllithium of the formula $LiR^1$, where $R^1$ is $C_1$-$C_{12}$-alkyl, subject to the proviso that the atomic ratio of chromium in supported catalyst (1):lithium in cocatalyst (2) is greater than 1:100.

**Revendications**

1. Procédé de préparation d'homopolymères de l'éthylène, ainsi que de copolymères de l'éthylène avec

11

des quantités mineures d'α-monoalcènes en $C_3$ à $C_{12}$ en liaison polymère, par polymérisation du ou des monomères à des températures de 30 à 150°C et sous des pressions de 2 à 150 bar par catalyse de Phillips au moyen

(1) d'un catalyseur sur support, se composant d'une matière de support qui est chargée avec du chrome sous forme d'oxyde, ainsi qu'avec du titane sous forme d'oxyde, et

(2) d'un co-catalyseur,

le catalyseur sur support (1) ayant été obtenu

(1.1) en préparant, dans une première étape, un précurseur de catalyseur (1.1) chargé des quantités désirées de chrome et de titane, à partir

(1.1.a) d'une matière de support du type silicate, poreuse et finement divisée,

(1.1.b) d'un composé du chrome spécifique sélectionné et

(1.1.c) d'un composé du titane spécifique sélectionné,

puis

(1.2) en maintenant, dans une seconde étape, le précurseur de catalyseur (1.1) obtenu dans la première étape dans un courant gazeux contenant de l'oxygène anhydre avec une concentration de plus de 10% en volume, pendant 10 à 1000 mn à une température de 300 à 900°C, pour le transformer ainsi en le catalyseur sur support (1) proprement dit,

caractérisé en ce que

(1) on utilise un catalyseur sur support qui a été obtenu

(1.1) par la préparation, dans une première étape, d'un précurseur de catalyseur que l'on obtient,

(1.1.1) en préparant tout d'abord, dans une première sous-étape, une suspension par un bon mélange intime (1.1.1.1) d'une matière de support du type silicate, poreuse et finement divisée, qui a un diamètre de particules de 1 à 400 $\mu$m, un volume de pores de 0,5 à 3 $cm^3$/g et une surface de 100 à 1000 $m^2$/g, et

(1.1.1.2) d'un alcane en $C_6$ à $C_8$ à l'état liquide, étant spécifié que 150 à 5000 parties en poids de l'alcane (1.1.1.2) correspondent à 100 parties en poids de la matière de support (1.1.1.1),

puis

(1.1.2) en combinant dans une deuxième sous-étape, toujours par un bon mélange intime,

(1.1.2.1) la suspension résultant de (1.1.1)

(1.1.2.2) à un anhydride chromique ($CrO_3$) finement divisé, présentant un diamètre de particules de moins de 2000 $\mu$m,

étant spécifié que 0,1 à 5 parties en poids de chrome de l'anhydride chromique (1.1.2.2) correspondent à 100 parties en poids de la matière de support (1.1.1.1),

et ensuite

(1.1.3) en réunissant dans une troisième sous-étape, tout en poursuivant le bon mélange intime à une température de 0 à 60°C,

(1.1.3.1) la suspension obtenue dans la sous-étape (1.1.2) à

(1.1.3.2) un alcanol en $C_3$ à $C_{10}$,

étant spécifié que 3 à 30 parties en poids de l'alcanol (1.1.3.2) correspondent à 100 parties en poids de la matière de support (1.1.1.1), le tout étant maintenu pendant 10 à 300 mn à la température mentionnée,

et ensuite,

(1.1.4) en réunissant dans une quatrième sous-étape, tout en maintenant le bon mélange intime à une température de 0 à 60°C,

(1.1.4.1) la suspension formée dans la sous-étape (1.1.3) à

(1.1.4.2) un composé du titane de formule $Ti(OR)_4$ - dans laquelle R est mis pour un groupement alkyle en $C_1$ à $C_{12}$, aryle ou cycloalkyle, étant spécifié que 0,1 à 10 parties en poids de titane du composé du titane (1.1.4.2) correspondent à 100 parties en poids de la matière de support (1.1.1.1), le tout étant maintenu pendant 5 à 300 mn à la température mentionnée,

et enfin

(1.1.5) en évaporant, dans une cinquième sous-étape, la suspension obtenue dans la sous-étape (1.1.4), à une température ne dépassant pas 150°C - éventuellement sous pression réduite - jusqu'à la siccité,

puis

(1.2) par la transformation, dans une deuxième étape, du précurseur de catalyseur obtenu dans la première étape (1.1) en le catalyseur sur support proprement dit,

(1.2.1) en maintenant tout d'abord, dans une première sous-étape, le précurseur de catalyseur obtenu dans la première étape (1.1) dans un courant d'azote anhydre pendant 60 à 500 mn à une température de 150 à 300°C,

puis,

(1.2.2) en maintenant, dans une deuxième sous-étape, le produit intermédiaire obtenu dans la sous-étape (1.2.1) dans un courant gazeux anhydre, contenant de l'oxygène avec une concentration de plus de 10% en volume, pendant 10 à 1000 mn à une température de 300 à 900°C,

et enfin

(1.2.3) en maintenant, dans une troisième sous-étape, le produit intermédiaire obtenu dans la sous-étape (1.2.2) dans un courant d'azote anhydre, pendant 10 à 300 En à une température de 50 à 400°C,

et

(2) on utilise, comme co-catalyseur, un lithium-alkyle de formule LiR' - dans laquelle R' est mis pour un groupement alkyle en $C_1$ à $C_{12}$-,

étant spécifié que le rapport atomique du chrome dans le catalyseur sur support (1) au lithium dans le co-catalyseur (2) est supérieur à 1 : 100.